# EUROPÄISCHE PATENTANMELDUNG

(11) **EP 2 781 613 A1**
(43) Veröffentlichungstag der Anmeldung: **24.09.2014**
(21) Anmeldenummer: 13160357.3
(22) Anmeldetag: 21.03.2013
(51) Int. Cl.: C22C 19/05, F01D 5/14

(54) **Optimierte Nickellegierung und daraus gefertigte Turbinenschaufel**

(71) Anmelder: Siemens Aktiengesellschaft, 80333 München (DE)
(72) Erfinder: Hasselqvist, Magnus, 61213 Finspong (SE); Karlsson, Fredrik, 61691 Aby (SE)

(57) **Zusammenfassung**

Die Erfindung betrifft eine Nickellegierung mit einem Gewichtsanteil von Cr von 12% bis 13% und einem Gewichtsanteil von Al von 4,3% bis 4,7%. Bevorzugt sind die Komponenten Co, Cr, Mo, Re und/oder W, Al, Ti, Ta, Hf, Si, Reaktive Elemente umfassend Aktinide und Lanthanide, C, gegebenenfalls zusätzlich die Komponenten Zr und/oder B enthalten. Die Gewichtsanteile sind dabei so gewählt, dass zugleich eine gewünschte hohe Kriechfestigkeit wie auch eine gewünschte hohe Heißkorrosionsbeständigkeit erreicht wird. Die Erfindung betrifft ebenfalls eine aus der Nickellegierung gefertigte Turbinenschaufel.

## Beschreibung

Die Erfindung betrifft eine optimierte Nickellegierung, insbesondere zum Einsatz in Turbinenschaufeln.

Nickellegierungen in Turbinenschaufeln sollten möglichst hohen Temperaturen standhalten, da eine höhere Temperatur einen höheren Wirkungsgrad der thermischen Kraftanlage zulässt, in der die Turbinenschaufeln zum Einsatz kommen sollen. Eine Begrenzung der zulässigen Temperatur ergibt sich dadurch, dass bei zu hohen Temperaturen die Kriechfestigkeit und/oder die Heißkorrosionsbeständigkeit der Legierung abnehmen. Problematisch hierbei ist, dass bei einem Chromanteil - soweit im Rahmen dieser Abhandlung von Anteilen gesprochen wird, sind immer Gewichtsanteile gemeint - von unter 12% die Heißkorrosionsbeständigkeit deutlich abnimmt. Die Kriechfestigkeit hingegen sinkt mit steigendem Chromgehalt. Um einen vernünftigen Kompromiss zu erzielen, werden daher bisher Legierungen eingesetzt, deren Chromgehalt bei 12% oder knapp darüber liegt.

Aufgabe der Erfindung ist es einen geeigneten Werkstoff für Turbinenschaufeln bereitzustellen, der höhere Betriebstemperaturen und damit höhere Wirkungsgrade ermöglicht.

Die Lösung dieser Aufgabe findet sich insbesondere im unabhängigen Anspruch. Die abhängigen Ansprüche geben vorteilhafte Weiterentwicklungen an. Weitere Details sind der Beschreibung und den Figuren zu entnehmen.

Es wurde erkannt, dass eine Nickellegierung mit einem Gewichtsanteil von Chrom (Cr) von 12% bis 13% und einem Gewichtsanteil von Aluminium (Al) von 4,3% bis 4,7% einzusetzen ist. Vollständigkeitshalber sei erwähnt, dass die Nickellegierung neben den genannten Komponenten und später genannten Komponenten, sowie in manchen Fällen zusätzlichen nicht genannten Komponenten, hauptsächlich Nickel enthält, so dass die Summe aller Gewichtsanteile 100% beträgt. Dabei sind gegebenenfalls Verunreinigungen zu berücksichtigen. Während die genannten Anteile für Chrom im Stand der Technik, etwa bei den häufig eingesetzten Legierungen IN792, PWA1483 oder IN792DS bekannt sind, sind bisher stets andere Gewichtsanteile von Aluminium eingesetzt worden. Es hat sich herausgestellt, dass es wichtig ist, diesen Gewichtsanteil von Aluminium zu wählen, um zugleich eine befriedigende Heißkorrosionsbeständigkeit wie auch eine gewünschte Kriechfestigkeit zu erhalten. Freilich geht es hierbei sowohl bei der Kriechfestigkeit als auch bei der Heißkorrosionsbeständigkeit um eine Beständigkeit bei Temperaturen im Bereich von 800°C bis 900°C, wie sie beim Betrieb von Gasturbinen auftreten können. Auch bei anderen Anwendungen etwa bei Flugzeugantrieben können solche Temperaturen auftreten. Zurückkommend zu Gasturbinen ist auszuführen, dass bei zweistufigen Gasturbinen eine um 30°C angehobene zulässige Temperatur der Turbinenschaufeln eine Erhöhung der Feuerungstemperatur um 50°C ermöglicht. Insgesamt lässt sich damit die Leistung um 10 Prozentpunkte erhöhen. Der angesichts der Energieproblematik immer wichtiger werdende Wirkungsgrad lässt sich um 1 Prozentpunkt erhöhen. Im Hinblick auf die bereits jetzt schon sehr hohen Wirkungsgrade von Gasturbinen ist dies nochmals eine beachtliche Steigerung.

In weiten Bereichen fehlen genaue Erklärungen, warum bestimmte Gewichtsanteile verschiedener Komponenten oder Gewichtsanteilsbereiche dieser Komponenten für die gewünschten Eigenschaften vorteilhaft sind. Die Gründe sind häufig gar nicht genau bekannt. Dies ist letztlich irrelevant; für eine ausführbare technische Lehre genügt es, die Gewichtsanteile oder Gewichtsanteilsbereiche anzugeben. Es versteht sich dabei, dass alle Zahlenwerte mit gewissen Ungenauigkeiten behaftet sind und nicht als ganz strikte Grenze angesehen werden dürfen. Freilich geben die Zahlenwerte eine Orientierung und ermöglichen die Darstellung der Unterschiede zu bekannten Legierungen.

Besonders gute Ergebnisse können erzielt werden, wenn der Gewichtsanteil von Chrom von 12,3% bis 12,7%, vorzugsweise 12,5%, beträgt.

Als weiteres wichtiges Kriterium hat sich das Gewichtsverhältnis von Tantal (Ta) zu Titan (Ti) herausgestellt. Ein günstiger Bereich für Legierungen mit hoher Kriechfestigkeit und hoher Heißkorrosionsbeständigkeit ist hierbei der Bereich von 2 bis 3,5.

In einer vorteilhaften Ausführungsform beträgt der Gewichtsanteil von Aluminium 4,4% bis 4,6%. Dies hat sich insbesondere bei bestimmten einkristallinen Legierungen als vorteilhaft erwiesen.

In einer weiteren Ausführungsform beträgt der Gewichtsanteil von Aluminium 4,3% bis 4,5%. Dies ist ebenfalls für bestimmte einkristalline Legierungen vorteilhaft. Aber auch für eine Ausführungsform, bei der darauf geachtet wird, dass bei der nach dem Gießen der Bauteile folgenden Erstarrung eine sogenannte gerichtete Erstarrung erfolgt, welche zu hoher Stabilität führt, hat sich dieser Gewichtsbereich als vorteilhaft herausgestellt.

Bei weiteren vorteilhaften Ausführungsformen beträgt der Gewichtsanteil von Kobalt (Co) 3% bis 12%, besonders bevorzugt 4% bis 6%. Diese Gewichtsanteile haben sich als geeignet herausgestellt.

Für eine bevorzugte Ausführungsform, genauer gesagt für eine Mehrzahl bevorzugter Ausführungsformen der Nickellegierung, hat sich herausgestellt, dass folgende Komponenten enthalten sein sollten: Nickel, Kobalt, Chrom, Molybdän (Mo), Rhenium (Re) und/oder Wolfram (W), Aluminium, Titan, Tantal, Hafnium (Hf), Silizium (Si), eine bestimmte Menge reaktiver Elemente, welche Aktinide und Lanthanide und ähnliches umfassen, und Kohlenstoff (C). Schließlich können bei Bedarf Zirkonium (Zr) und Bor (B) hinzukommen. Die Gewichtsanteile sind dabei so zu wählen, dass zugleich eine gewünschte hohe Heißkorrosionsbeständigkeit wie auch eine gewünschte Hochtemperaturkriechfestigkeit erzielt wird. Hinsichtlich der Elemente Rhenium und Wolfram ist auszuführen, dass im Rahmen dieses Absatzes sowie des zugehörigen Anspruchs Ausführungsformen umfasst sein sollen, in denen sowohl Rhenium als auch Wolfram vorkommt, wie aber auch Ausführungsformen, in denen entweder Rhenium oder Wolfram vorkommt. Im Regelfall sind, abgesehen von kleinen Verunreinigungen, keine weiteren Komponenten außer den vorgenannten Komponenten enthalten.

Für eine Reihe von Ausführungsformen ist vorgesehen, dass der Gewichtsanteil von Zirkonium 0% bis 0,1% beträgt und der Gewichtsanteil von Bor 0% bis 0,02% beträgt. Es sind somit auch Ausführungsformen umfasst, bei denen weder Bor noch Zirkonium enthalten ist. Diese Gewichtsbereiche haben sich für eine Vielzahl von Legierungen als vorteilhaft erwiesen.

In einer Ausführungsform der Erfindung beträgt der Gewichtsanteil von Wolfram dabei 3,3% bis 3,7%. Ferner kann der Gewichtsanteil von Zirkonium 0,01% bis 0,1% betragen. Darüber hinaus kann ein Gewichtsanteil von Bor von 0,005% bis 0,2% vorgesehen sein. Diese Werte haben sich für eine Ausführungsform, bei der eine gerichtete Erstarrung der gegossenen Nickellegierung angestrebt wird, als vorteilhaft erwiesen. Bei dieser Ausführungsform ist im Regelfall kein Rhenium enthalten.

In einer weiteren Ausführungsform der Erfindung beträgt der Gewichtsanteil von Zirkonium 0,02% und der Gewichtsanteil von Wolfram 3,3% bis 3,7%. Normalerweise ist hier ebenfalls vorgesehen, kein Rhenium hinzuzufügen. Die vorgenannte Zusammensetzung hat sich für eine einkristalline Ausführungsform als vorteilhaft erwiesen.

In einer weiteren Ausführungsform beträgt der Gewichtsanteil von Zirkonium 0,05% und/oder der Gewichtsanteil von Bor 0,005%. Diese Gewichtsanteile haben sich für eine Ausführungsform, bei der die Legierung als Einkristall vorliegen soll, bewährt.

In einer weiteren Ausführungsform beträgt der Gewichtsanteil von Zirkonium 0,02%, und/oder der Gewichtsanteil von W und Re jeweils 1,8% bis 2,2%. Normalerweise ist hier kein zusätzliches Bor vorgesehen. Diese Werte haben sich für eine weitere Nickellegierung, die als Einkristall vorliegen soll, bewährt.

Wie bereits angesprochen eignet sich die oben geschilderte Nickellegierung, eine Turbinenschaufel daraus zu fertigen. Dabei können in der Turbinenschaufel gegebenenfalls weitere Einbauten vorhanden sein, die nicht aus der geschilderten Nickellegierung gefertigt sind.

In einer Ausführungsform handelt es sich bei der Turbinenschaufel um ein einkristallines Gussteil aus der geschilderten Nickellegierung. Freilich sind hierzu bevorzugt solche Ausführungsformen der Nickellegierung zu wählen, die sich wie beschrieben hierfür eignen. Die Turbinenschaufel kann dabei neben dem einkristallinen Gussteil auch weitere Einbauten aufweisen.

In einer weiteren Ausführungsform handelt es sich bei der Turbinenschaufel um ein gerichtet erstarrtes Gussteil aus der geschilderten Nickellegierung. Freilich sind hierzu bevorzugt solche Ausführungsformen der Nickellegierung zu wählen, die sich wie beschrieben hierfür eignen. Die Turbinenschaufel kann dabei neben dem gerichtet erstarrten Gussteil auch weitere Einbauten aufweisen.

Weitere Einzelheiten der Erfindung sollen anhand von Figuren und Tabellen nachfolgend näher beschrieben werden. Dabei zeigen:
- Figur 1:: den Chromanteil und den Aluminiumanteil bekannter Legierungen sowie der erfindungsgemäßen Legierung
- Figur 2:: den Aluminiumanteil und das Verhältnis von Tantal zu Titan von bekannten Legierungen und der erfindungsgemäßen Legierung
- Figur 3:: eine Tabelle mit den Wertebereichen für die verschiedensten Ausführungsformen der Erfindung.

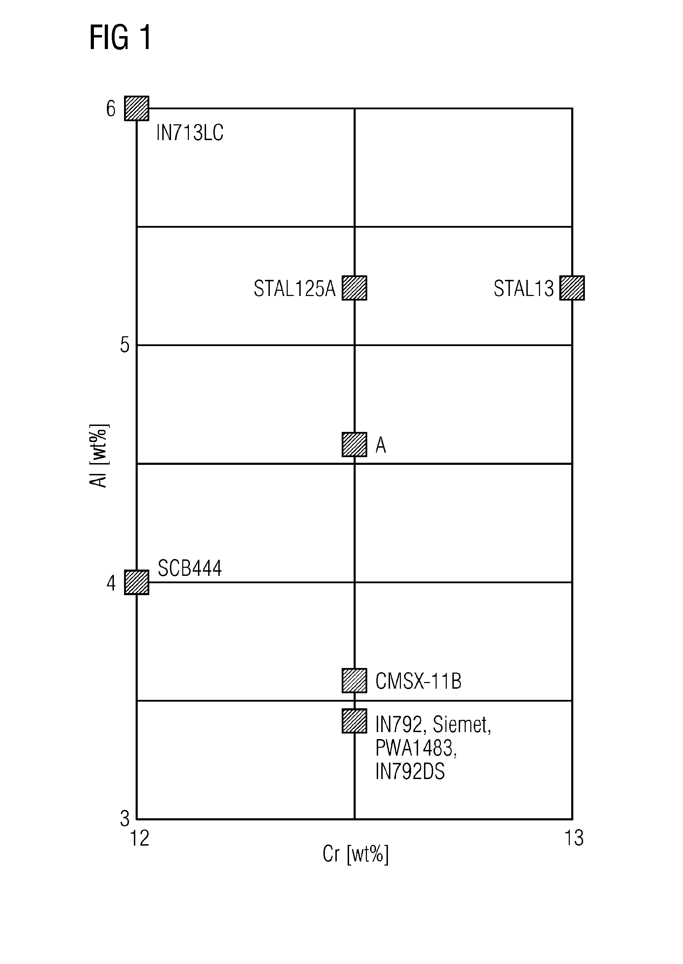

In Figur 1 ist auf der Rechtswertachse der Gewichtsanteil von Chrom aufgetragen. Dabei wird links mit einem Gewichtsanteil von 12% begonnen. Der höchste Gewichtsanteil von Chrom ist rechts bei einem Gewichtsanteil von 13% erreicht. Auf der Hochwertachse ist der Gewichtsanteil von Aluminium, beginnend bei 3% und endend bei 6% dargestellt. Die einzelnen Kästchen markieren überwiegend bekannte Legierungen. So ist ganz unten auf der Linie mit einem Gewichtsanteil von Chrom von 12,5% angegeben, dass dort die Legierungen IN792, Siemet, sowie PWA1483 sowie IN792DS zu finden sind. Dabei handelt es sich um bekannte und erprobte Legierungen. Deren Aluminiumanteil liegt knapp unterhalb 3,5%. Denselben Gewichtsanteil von Chrom, also 12,5%, aber einen etwas höheren Gewichtsanteil von Aluminium von knapp über 3,5% hat die Legierung CMSX-11B. Bei einem Gewichtsanteil von Aluminium von 4% und einem Gewichtsanteil von Chrom von 12% ist die Legierung SCB444 zu finden. Nun folgt weiter oben ein gekennzeichneter Bereich mit einem Kästchen, das mit A bezeichnet ist. In diesem bisher von Nickelliegerungen nicht belegten Bereich, also einem Gewichtsanteil von Chrom von 12% bis 13% und einem Gewichtsanteil von Aluminium von 4,3% bis 4,7% sind Nickellegierungen anzutreffen, welche eine hohe Heißkorrosionsbeständigkeit und ebenfalls eine hohe Hochtemperaturdruckfestigkeit aufweisen. Mit dem Punkt A ist eine besonders bevorzugte Ausführungsform angegeben. Oberhalb des gekennzeichneten Bereichs finden sich wieder eine Reihe bekannter Legierungen, wie STAL125 bei einem Chromanteil von 12,5% und einem Aluminiumanteil von 5,2%. Bei diesem Aluminiumanteil und einem Chromanteil von 13% ist STAL13 zu finden. Schließlich ist IN713LC angegeben, das einen Aluminiumanteil von 6% und einen Chromanteil von 12% aufweist.

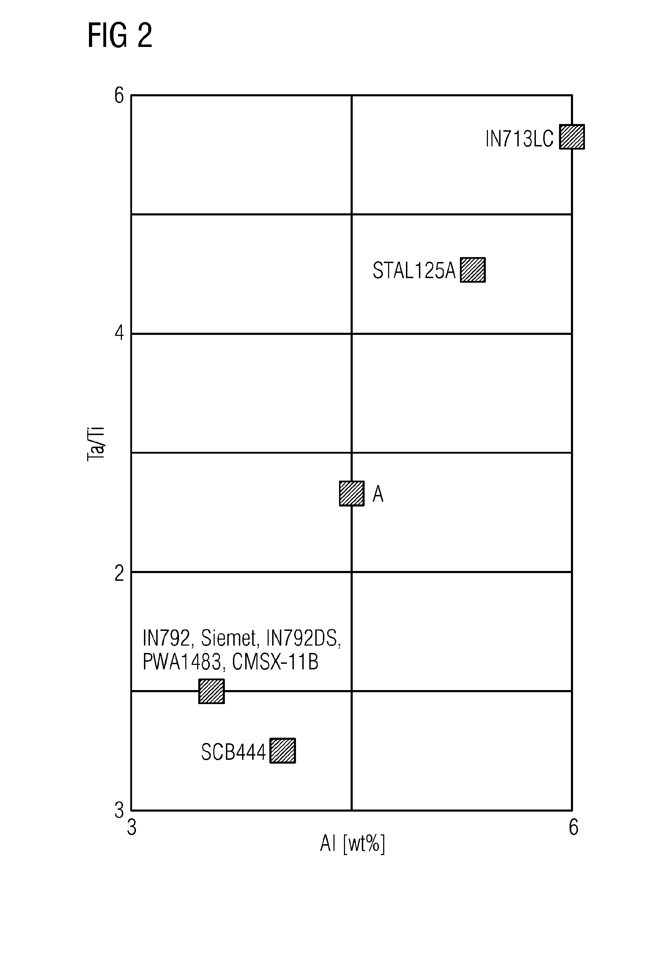

Weitere Informationen liefert Figur 2. Auf der Rechtswertachse ist der Gewichtsanteil von Aluminium aufgetragen, der bei 3% beginnt und bei 6% endet. Auf der Hochwertachse ist das als wichtig erkannte Verhältnis von Tantal zu Titan aufgetragen, beginnend bei 0 und endend bei 6. Im unteren Bereich finden sich die auch in Figur 1 gezeigten Legierungen SCB444 und weiter oben die Legierungen IN792, Siemet, IN792DS, PWA1483 und CMSX-11B. Im darüber liegenden gekennzeichneten Bereich befinden sich die erfindungsgemäßen Legierungen. Mit dem Kästchen A ist wiederum eine besonders bevorzugte Ausführungsform angegeben. Weiter oben finden sich die ebenfalls aus dem Stand der Technik bekannten Legierungen STAL125A und schließlich die Legierung IN713LC. Auch daraus wird ersichtlich, dass im Wertebereich der erfindungsgemäßen Legierung bisher keine Legierungen vorhanden sind. Bei den hier dargestellten Parametern, also dem Gewichtsanteil von Aluminium und dem Gewichtsverhältnis von Tantal zu Titan handelt es sich um als wichtig erkannte Parameter.

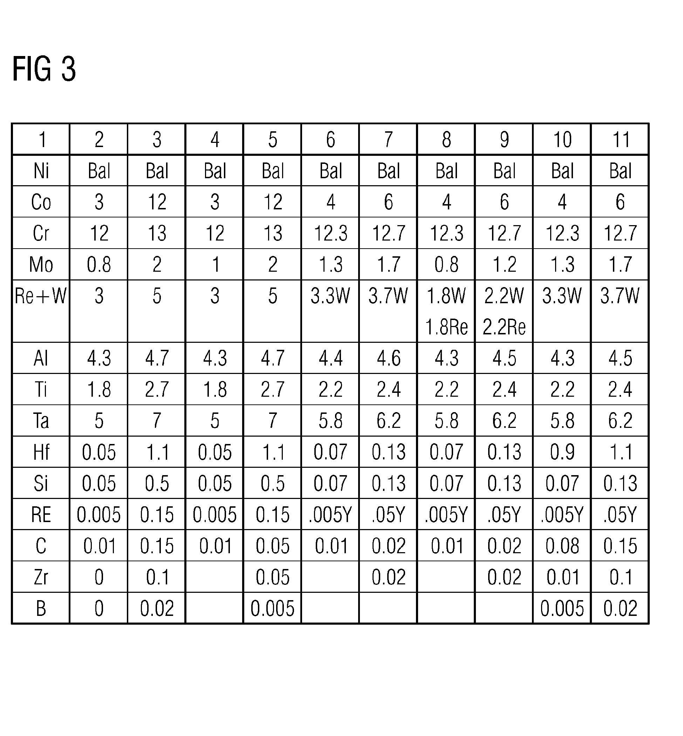

In Figur 3 ist schließlich eine Tabelle gezeigt, in der Wertebereiche von wichtigen Ausführungsformen der Erfindung genannt sind. Dabei sind in der ganz linken ersten Spalte von oben nach unten die Elemente aufgetragen. Zunächst die Hauptkomponente Nickel. Dann der Reihenfolge nach die Elemente Kobalt, Chrom, Molybdän, sodann die Summe aus Rhenium und Wolfram, weiterhin Aluminium, Titan, Tantal, Hafnium und Silizium. Dann folgen mit RE abgekürzte reaktive Elemente. Darunter ist die Summe von Aktiniden und Lanthaniden und ähnlichen Elementen zu verstehen. Dem folgen Kohlenstoff, Zirkonium und Bor.

In der zweiten und dritten Spalte sind jeweils die minimalen und maximalen Gewichtsanteile angegeben. Nach bisheriger Erkenntnis fallen alle möglichen Ausführungsformen der Erfindung in diesen Wertebereich hinein. Damit soll aber nicht ausgeschlossen werden, dass auch außerhalb dieser Werte oder durch Hinzufügung weiterer Komponenten die Erfindung verlassen würde.

Erläutert werden soll, dass als Wert bei der Hauptkomponente Nickel stets Bal angegeben ist. Damit soll ausgedrückt werden, dass neben den sonstigen Komponenten hauptsächlich Nickel vorhanden ist. Dabei ist freilich stets so viel Nickel enthalten, dass die Summe aller Gewichtsanteile 100% beträgt.

Nach rechts folgen nun weitere Spaltenpaare. In der linken Spalte eines Spaltenpaars ist wiederum jeweils der minimale Wert und rechts wiederum der maximale Wert für die jeweiligen Ausführungsformen angegeben. Bei den Spalten 4 und 5, sowie 6 und 7 sowie 8 und 9 handelt es sich um einkristalline Ausführungsformen. Bei den beiden letzten Spalten, den Spalten 10 und 11 handelt es sich um einen Bereich für eine Ausführungsform, bei der die Nickellegierung als gerichtet erstarrte Legierung vorliegt.

Es ist zu betonen, dass die genannten Werte nicht von vornherein als richtige Werte vorhergesagt werden konnten. Wie schon dargelegt, ist auch keine wissenschaftlich sichere Erklärung für die Werte anzugeben. Es soll aber nicht verkannt werden, dass aus der Analyse bekannter Legierungen deren Eigenschaften und deren Zusammensetzung sich gewisse Anhaltspunkte ergeben, wie die Legierung aussehen soll.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Nickellegierung mit einem Gewichtsanteil von Cr von 12% bis 13% und einem Gewichtsanteil von Al von 4,3% bis 4,7%.

2. Nickellegierung nach Anspruch 1, wobei der Gewichtsanteil von Cr 12,3% bis 12,7%, bevorzugt 12,5% beträgt.

3. Nickellegierung nach einem der Ansprüche 1 oder 2, wobei das Gewichtsverhältnis von Ta zu Ti 2 bis 3,5 beträgt.

4. Nickellegierung nach einem der vorhergehenden Ansprüche, wobei der Gewichtsanteil von Al 4,4% bis 4,6% beträgt.

5. Nickellegierung nach einem der Ansprüche 1 bis 3, wobei der Gewichtsanteil von Al 4,3% bis 4,5% beträgt.

6. Nickellegierung nach einem der vorhergehenden Ansprüche, wobei ein Gewichtsanteil von Co 3% bis 12% beträgt, besonders bevorzugt 4% bis 6%.

7. Nickellegierung nach einem der vorhergehenden Ansprüche, mit den Komponenten Co, Cr, Mo, Re und/oder W, Al, Ti, Ta, Hf, Si, Reaktive Elemente umfassend Aktinide und Lanthanide, C, gegebenenfalls zusätzlich mit den Komponenten Zr und/oder B, wobei die Gewichtsanteile so gewählt sind, dass zugleich eine gewünschte hohe Kriechfestigkeit wie auch eine gewünschte hohe Heißkorrosionsbeständigkeit erreicht wird.

8. Nickellegierung nach einem der vorhergehenden Ansprüche, wobei der Gewichtsanteil von Zr 0% bis 0,1% und/oder der Gewichtsanteil von B 0% bis 0,02% beträgt

9. Nickellegierung nach einem der vorhergehenden Ansprüche, wobei der Gewichtsanteil von W 3,3% bis 3,7% beträgt und/oder der Gewichtsanteil von Zr 0,01% bis 0,1% beträgt und/oder der Gewichtsanteil von B 0.005% bis 0,2% beträgt.

10. Nickellegierung nach einem der Ansprüche 1 bis 8, wobei der Gewichtsanteil von Zr 0,02% beträgt und/oder der Gewichtsanteil von W 3,3% bis 3,7% beträgt, wobei der Anteil von B insbesondere 0% beträgt.

11. Nickellegierung nach einem der Ansprüche 1 bis 8, wobei der Gewichtsanteil von Zr 0,05% und/oder der Gewichtsanteil von B 0,005% beträgt.

12. Nickellegierung nach einem der Ansprüche 1 bis 8, wobei der Gewichtsanteil von Zr 0,02% beträgt, und/oder der Gewichtsanteil von W und Re jeweils 1,8% bis 2,2% beträgt, und wobei der Anteil von B insbesondere 0% beträgt.

13. Turbinenschaufel, die aus einer Nickellegierung nach einem der vorhergehenden Ansprüche besteht oder diese enthält.

14. Turbinenschaufel nach Anspruch 13, **dadurch gekennzeichnet, dass** die Turbinenschaufel ein einkristallines Gussteil ist oder ein solches umfasst.

15. Turbinenschaufel nach Anspruch 13, **dadurch gekennzeichnet, dass** die Turbinenschaufel ein gerichtet erstarrtes Gussteil ist oder ein solches umfasst.
